# EUROPEAN PATENT SPECIFICATION

(11) **EP 4 435 380 B1**
(45) Date of publication and mention of the grant of the patent: **18.11.2026**
(21) Application number: 21970097.8
(22) Date of filing: 31.12.2021
(51) Int. Cl.: G01C 21/20, G01P 21/02, G08G 3/00, G01C 21/10, G06Q 10/04, G08G 3/02, G06Q 50/40

(54) **SERVER, METHOD AND COMPUTER PROGRAM FOR DERIVING OPTIMAL ROUTE OF SHIP**
SERVER, VERFAHREN UND COMPUTERPROGRAMM ZUR ABLEITUNG EINER OPTIMALEN SCHIFFROUTE
SERVEUR, PROCÉDÉ ET PROGRAMME INFORMATIQUE POUR DÉDUIRE UN ITINÉRAIRE OPTIMAL D'UN NAVIRE

(30) Priority: 28.12.2021 KR 20210189761
(43) Date of publication of application: 25.09.2024
(73) Proprietor: Weatheri Inc., Seoul 07239 (KR)
(72) Inventor: KIM, Young Doh, Seoul 05236 (KR)
(74) Representative: Manitz Finsterwald Patent- und Rechtsanwaltspartnerschaft mbB
(86) International application number: PCT/KR2021/020347
(87) International publication number: WO 2023/128028

(56) References cited:
- EP-A1- 3 006 322
- EP-A1- 3 901 579
- WO-A1-2021/106096
- CN-A- 112 749 847
- JP-A- 2009 286 230
- JP-A- 2014 013 145
- KR-A- 20110 103 082
- KR-A- 20200 061 679
- KR-B1- 102 109 571
- BENTIN MARCUS ET AL: "A New Routing Optimization Tool-influence of Wind and Waves on Fuel Consumption of Ships with and without Wind Assisted Ship Propulsion Systems", TRANSPORTATION RESEARCH PROCEDIA, vol. 14, 1 January 2016 (2016-01-01), pages 153 - 162, XP093018904, ISSN: 2352-1465, DOI: 10.1016/j.trpro.2016.05.051

## Description

### TECHNICAL FIELD

The present disclosure relates to a server, a method and a computer program for deriving an optimal route of a ship.

### BACKGROUND

The Speed Reduction Algorithm (SRA) is used to calculate the location of a ship by analyzing the ship's speed reduction caused by the influence of weather factors and current factors.

The SRA is also used to evaluate the ship performance speed. A method of analyzing speed down curve during the entire sailing is used to calculate the ship performance speed. This is a method for calculating how much the speed of the ship is influenced by weather factors and current factors.

That is, the SRA is used to calculate the ship performance speed and the ship location, which serve as the main data for determining the route of the ship. In this case, the accuracy of the ship speed down curve is important in order to accurately calculate the ship performance speed and the ship location.

Regarding the technology of providing the route of a ship by analyzing the speed of the ship, prior art Korean Patent No. 10-2006925 discloses an apparatus and method for determining a route and speed of a vessel, and a recording medium.

Conventionally, even though individual ships have different degrees of influence by winds, waves, and currents, a fixed speed down curve is uniformly reflected to each ship and a recommended route is provided. That is, instead of a speed down curve for each ship, a speed down curve corresponding to the ship type or sister ship (same type or fleet) is adjusted at a predetermined rate and used, and, thus, an optimal recommended route reflecting sailing characteristics of each ship cannot be provided.

Also, conventionally, the ship location and sailing information can be obtained only when a sailing report of each ship is received from a shipping company. Therefore, algorithms that are not greatly modified from the conventional speed reduction algorithm have been used.

As described above, conventionally, actual sailing characteristics of individual ships cannot be reflected. Thus, the accuracy of the optimal recommended route of each ship is low. EP 3901579 A1 discloses a navigation support device that stores performance estimation models regarding speed of a vessel for each of vessel maneuvering patterns; accepts one of the vessel maneuvering patterns to be used in a navigation, calculates the speed of the vessel on a route, based on one of the performance estimation models that corresponds to the accepted one of the vessel maneuvering patterns among the performance estimation models, and meteorological and hydrographic forecast data, and displays an arrival time on the route that is optimal, based on the speed of the vessel that has been calculated, thereby being able to present an accurate optimal route according to the vessel maneuvering pattern. EP 3006322 A1 discloses other methods, devices and programs for assisting navigation.

### Disclosure of the Invention

### PROBLUMS TO BE SOLVED BY THE INVENTION

The present disclosure is conceived to provide a server, method and computer program for storing marine data including winds, wave heights, and currents by matching the marine data with sailing data at each time point and each location included in the sailing data of each sailing obtained from an Automatic Identification System installed on a ship.

The present disclosure is conceived to provide a server, method and computer program for deriving a first corrected ship speed by excluding an influence of currents from a speed of a ship for each sailing, the first corrected ship speed by excluding an influence of currents on the first corrected ship speed, a second corrected ship speed by considering an influence of winds on the first corrected ship speed at each location, and a third corrected ship speed by considering an influence of waves on the first corrected ship speed at each location.

The present disclosure is conceived to provide a server, method and computer program for deriving a first speed down curve related to winds and a second speed down curve related to waves based on a basic speed, a second corrected ship speed and a third corrected ship speed of a ship, and an optimal route of the ship by using the Speed Reduction Algorithm (SRA) to which the first speed down curve or the second speed down curve is applied.

However, the problems to be solved by the present disclosure are not limited to the above-described problems. There may be other problems to be solved by the present disclosure.

### MEANS FOR SOLVING THE PROBLEMS

As a means for achieving the above-described technical problems, an aspect of the present disclosure provides an optimal route derivation server, including a storage unit configured to store marine data including winds, wave heights, and currents by matching the marine data with sailing data at each time point and each location included in the sailing data of each sailing obtained from an Automatic Identification System installed on a ship, a corrected ship speed derivation unit configured to derive a first corrected ship speed by excluding an influence of currents from a speed of the ship for each sailing, a second corrected ship speed by considering an influence of winds on the first corrected ship speed at each location, and a third corrected ship speed by considering an influence of waves on the first corrected ship speed at each location, a speed down curve derivation unit configured to derive a first speed down curve related to winds and a second speed down curve related to waves based on a basic speed, the second corrected ship speed and the third corrected ship speed of the ship, and a route determination unit configured to derive an optimal route of the ship by using a Speed Reduction Algorithm to which the first speed down curve or the second speed down curve is applied. The route determination unit derives, at each sailing section, priorities of influences on the first speed down curve and the second speed down curve by comparison between the second corrected ship speed (200) and the third corrected ship speed at each location, and derives the optimal route of the ship for each sailing section by using the Speed Reduction Algorithm to which either one of the first speed down curve and the second speed down curve is applied based on the derived priorities of influences.

Another aspect of the present disclosure provides a method of deriving an optimal route, including storing marine data including winds, wave heights, and currents by matching the marine data with sailing data at each time point and each location included in the sailing data of each sailing obtained from an Automatic Identification System installed on a ship, deriving a first corrected ship speed by excluding an influence of currents from a speed of the ship for each sailing, a second corrected ship speed by considering an influence of winds on the first corrected ship speed at each location, and a third corrected ship speed by considering an influence of waves on the first corrected ship speed at each location, deriving a first speed down curve related to winds and a second speed down curve related to waves based on a basic speed, the second corrected ship speed and the third corrected ship speed of the ship, and deriving an optimal route of the ship by using a Speed Reduction Algorithm to which the first speed down curve or the second speed down curve is applied. The (deriving the optimal route includes: deriving, at each sailing section, priorities of influences on the first speed down curve and the second speed down curve by comparison between the second corrected ship speed and the third corrected ship speed; and deriving the optimal route of the ship for each sailing section by using the Speed Reduction Algorithm to which either one of the first speed down curve and the second speed down curve is applied based on the derived priorities of influences.

Yet another aspect of the present disclosure provides a computer program stored in a computer-readable medium including a sequence of instructions, which when executed by a computing device, causes a computing device to store marine data including winds, wave heights, and currents by matching the marine data with sailing data at each time point and each location included in the sailing data of each sailing obtained from an Automatic Identification System installed on a ship, derive a first corrected ship speed by excluding an influence of currents from a speed of the ship for each sailing, a second corrected ship speed by considering an influence of winds on the first corrected ship speed at each location, and a third corrected ship speed by considering an influence of waves on the first corrected ship speed at each location, derive a first speed down curve related to winds and a second speed down curve related to waves based on a basic speed, the second corrected ship speed and the third corrected ship speed of the ship, and derive an optimal route of the ship by using a Speed Reduction Algorithm to which the first speed down curve or the second speed down curve is applied. The deriving the optimal route includes: deriving, at each sailing section, priorities of influences on the first speed down curve and the second speed down curve by comparison between the second corrected ship speed and the third corrected ship speed; and deriving the optimal route of the ship for each sailing section by using the Speed Reduction Algorithm to which either one of the first speed down curve and the second speed down curve is applied based on the derived priorities of influences.

The above-described aspects are provided by way of illustration only and should not be construed as liming the present disclosure. Besides the above-described embodiments, there may be additional embodiments described in the accompanying drawings and the detailed description.

### EFFECTS OF THE INVENTION

According to any one of the above-described means for solving the problems of the present disclosure, it is possible to provide a server, method and computer program for providing an optimal route in consideration of sailing characteristics of each ship by storing marine data including winds, wave heights, and currents by matching the marine data with sailing data at each time point and each location included in the sailing data of each sailing obtained from an Automatic Identification System installed on the ship, and by matching a vast amount of sailing data which are easy to collect and use with location-based marine data.

Also, it is possible to provide a server, method and computer program for deriving a first corrected ship speed by excluding an influence of currents from the speed of a ship for each sailing, and deriving a second corrected ship speed by considering an influence of winds on the first corrected ship speed at each location and a third corrected ship speed by considering an influence of waves on the first corrected ship speed at each location.

Further, it is possible to provide a server, method and computer program for deriving a first speed down curve related to winds and a second speed down curve related to waves based on a basic speed, a second corrected ship speed and a third ship speed of a ship, and an optimal route of the ship by using the Speed Reduction Algorithm to which the first speed down curve or the second speed down curve is applied, and deriving the optimal route by using a unique speed down curve in consideration of sailing characteristics of the ship.

### BRIEF DESCRIPTION OF THE DRAWINGS

**FIG.** 1 is a configuration view of an optimal route derivation server according to an embodiment of the present disclosure.
**FIG.** 2 is an exemplary diagram illustrating a process of deriving a first speed down curve according to an embodiment of the present disclosure.
**FIG.** 3 is an exemplary diagram illustrating a process of deriving a second speed down curve according to an embodiment of the present disclosure.
**FIG. 4** is a flowchart showing a method of deriving an optimal route of a ship performed by the optimal route derivation server according to an embodiment of the present disclosure.

### BEST MODE FOR CARRING OUT THE INVENTION

Hereinafter, embodiments of the present disclosure will be described in detail with reference to the accompanying drawings to be readily implemented by a person with ordinary skill in the art to which the present invention belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, the term "connected to" or "coupled to" that is used to designate a connection or coupling of one element to another element includes both a case that an element is "directly connected or coupled to" another element and a case that an element is "electronically connected or coupled to" another element via still another element. Further, it is to be understood that the term "comprises or includes" and/or "comprising or including" used in the document means that one or more other components, steps, operation and/or existence or addition of elements are not excluded in addition to the described components, steps, operation and/or elements unless context dictates otherwise and is not intended to preclude the possibility that one or more other features, numbers, steps, operations, components, parts, or combinations thereof may exist or may be added.

In the document, the term "unit" includes units realized by hardware, units realized by software, and units realized by using both hardware and software. Moreover, one unit may be realized by using two or more hardware, and two or more units may be realized by one hardware.

Some of the operations or functions described as being performed by a terminal or device in the document may alternatively be performed by a server connected to the terminal or device. Similarly, some of the operations or functions described as being performed by a server may alternatively be performed by a terminal or device connected to the server.

Hereinafter, an embodiment of the present disclosure will be described in detail with reference to the accompanying drawings.

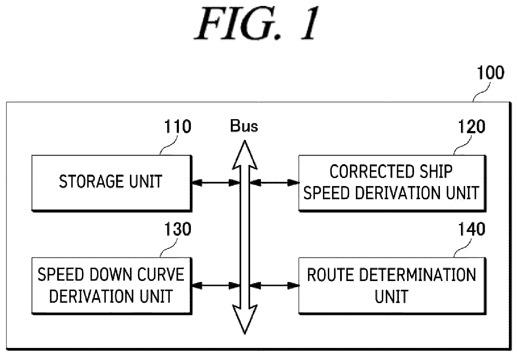

**FIG.** 1 is a configuration view of an optimal route derivation server according to an embodiment of the present disclosure. Referring to **FIG. 1****,** an optimal route derivation server 100 may include a storage unit 110, a corrected ship speed derivation unit 120, a speed down curve derivation unit 130, and a route determination unit 140. Herein, the optimal route derivation server 100 may derive a second corrected ship speed by considering the influence of winds on the speed of a ship and a third corrected ship speed by considering the influence of waves on the speed of the ship for each sailing, derive a first speed down curve related to winds and a second speed down curve related to waves based on the second corrected ship speed and the third corrected ship speed, and thus derive an optimal route of the ship by using the Speed Reduction Algorithm (SRA) to which the first speed down curve or the second speed down curve is applied. Hereinafter, the process of deriving an optimal route of a ship by each unit of the optimal route derivation server 100 will be described.

The storage unit 110 may store marine data including winds, wave heights, and currents by matching the marine data with sailing data at each time point and each location included in the sailing data of each sailing obtained from an Automatic Identification System (AIS) installed on the ship. Herein, the AIS is an automatic tracking system using a transceiver installed on a ship, and is mainly used for a ship traffic service. For example, the AIS can suppress a collision between ships on the sea by allowing a satellite to detect a signature of the AIS of the ship. The AIS may display, for example, the name, location, speed, type, expected departure time and expected arrival time at a port of entry of the ship. The sailing data may include the location, course and speed of the ship for each sailing.

The corrected ship speed derivation unit 120 may derive a first corrected ship speed by excluding an influence of currents from the speed of the ship for each sailing. For example, the corrected ship speed deriving unit 120 may calculate the first corrected ship speed according to Equation 1 below. [Equation 1] $FIRST CORRECTED SHIP SPEED = SOG \left(Speed of Ground\right) - \left[Current\left(Current Factor\right)\right]$

Referring to Equation 1, the speed of ground (SOG) may refer to the speed made good through the water, which is the speed of a ship on the sea as measured by satellites. The current factor refers to the number of currents encountered by a ship in a sailing route, and the influence of currents at each location can be identified by analyzing the current factor at each location along the route of the ship. The current factor may be calculated through, for example, V_{curent}cos(ϕ). Herein, the first corrected ship speed excluding the influence of currents from the SOG is derived to analyze only the influences of winds and waves on the SOG.

The corrected ship speed derivation unit 120 may derive the second corrected ship speed by considering the influence of winds on the first corrected ship speed at each location and the third corrected ship speed by considering the influence of waves on the first corrected ship speed at each location.

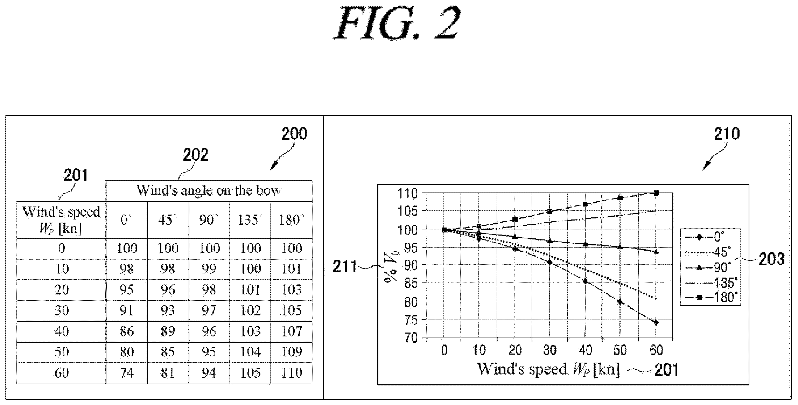

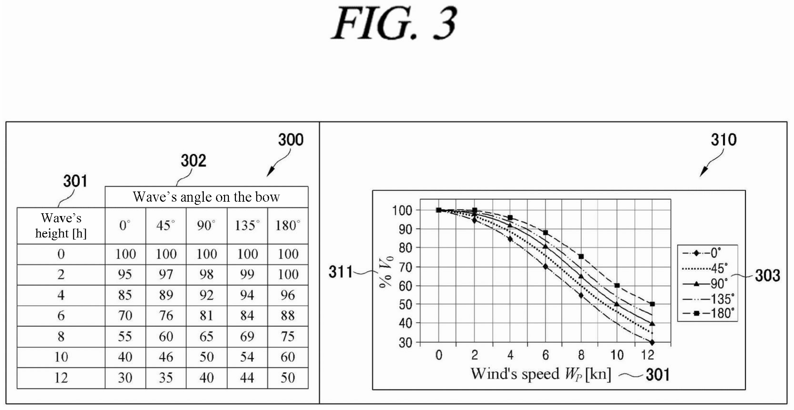

The speed down curve derivation unit 130 may derive the first speed down curve related to winds and the second speed down curve related to waves based on a basic speed, the second corrected ship speed and the third corrected ship speed of the ship. Herein, the process of deriving the first speed down curve and the second speed down curve will be described in detail with reference to **FIG.** 2 and **FIG. 3****.**

**FIG.** 2 is an exemplary diagram illustrating a process of deriving a first speed down curve according to an embodiment of the present disclosure. Referring to FIG. 2, the corrected ship speed derivation unit 120 may derive a second corrected ship speed 200 based on wind's angle on the bow and wind's speed at each location.

For example, the corrected ship speed derivation unit 120 may derive the second corrected ship speed 200 depending on wind's speed 201 (Wₚ) and wind's angle on the bow 202. For example, the corrected ship speed derivation unit 120 may derive the second corrected ship speed 200 as 80 kn when the wind's angle on the bow 202 is 0° and the wind's speed 201 is 50 kn. For another example, the corrected ship speed derivation unit 120 may derive the second corrected ship speed 200 as 103 kn when the wind's angle on the bow 202 is 180° and the wind's speed 201 is 20 kn.

The speed down curve derivation unit 130 may derive a first speed down curve 210 related to winds based on the basic speed and the second corrected ship speed 200 of the ship. For example, the speed down curve derivation unit 130 may derive the first speed down curve 210 including a ratio 211 of the first corrected ship speed to the basic speed (*e.g.,* 100 kn) of the ship at each wind's angle on the bow 203.

**FIG.** 3 is an exemplary diagram illustrating a process of deriving a second speed down curve according to an embodiment of the present disclosure. Referring to FIG. 3, the corrected ship speed derivation unit 120 may derive a third corrected ship speed 300 based on wave's angle on the bow and wave's height at each location.

For example, the corrected ship speed derivation unit 120 may derive the third corrected ship speed 300 depending on wave's height 301 and wave's angle on the bow 302 and. For example, the corrected ship speed derivation unit 120 may derive the third corrected ship speed 300 as 40 kn when the wave's angle on the bow 302 is 0° and the wave's height 301 is 10 h. For another example, the corrected ship speed derivation unit 120 may derive the third corrected ship speed 300 as 96 kn when the wave's angle on the bow 302 is 180° and the wave's height 301 is 4 h.

The speed down curve derivation unit 130 may derive a second speed down curve 310 related to waves based on the basic speed and the third corrected ship speed 300 of the ship. For example, the speed down curve derivation unit 130 may derive 310 the second speed down curve including a ratio 311 of the first corrected ship speed to the basic speed (*e.g.,* 100 kn) of the ship at each wave's angle on the bow 303.

Referring to **FIG.** 1 again, the route determination unit 140 may derive an optimal route of the ship by using the Speed Reduction Algorithm to which the first speed down curve or the second speed down curve is applied.

The route determination unit 140 may derive priorities of influences on the first speed down curve and the second speed down curve by comparison between the second corrected ship speed and the third corrected ship speed at each location. For example, the route determination unit 140 may derive the priorities of influences on the first speed down curve and the second speed down curve based on whether the SOG is more influenced by winds or waves by comparison between the second corrected ship speed and the third corrected ship speed at each location.

According to the invention, the route determination unit 140 derives the priorities of influences on the first speed down curve and the second speed down curve for each of a plurality of sailing sections, or derives the priorities of influences on the first speed down curve and the second speed down curve for the entire sailing section.

The route determination unit 140 may derive an optimal route of the ship by using the Speed Reduction Algorithm to which either one of the first speed down curve and the second speed down curve is applied based on the derived priorities of influences. For example, when the influence on the first speed down curve is greater than that on the second speed down curve according to the derived priorities of influences, the influence of winds on the SOG is greater than the influence of waves on the SOG, and, thus, the route determination unit 140 may derive an optimal route of the ship by using the Speed Reduction Algorithm to which the first speed down curve is applied. For another example, when the influence on the second speed down curve is greater than that on the first speed down curve according to the derived priorities of influences, the influence of waves on the SOG is greater than the influence of winds on the SOG, and, thus, the route determination unit 140 may derive an optimal route of the ship by using the Speed Reduction Algorithm to which the second speed down curve is applied.

According to the invention, the route determination unit 140 derives an optimal route for each sailing section by using the Speed Reduction Algorithm to which either one of the first speed down curve and the second speed down curve is applied for each sailing section.

For example, when the first speed down curve has a higher priority of influence than the second speed down curve for a first sailing section, the route determination unit 140 may derive an optimal route for the first sailing section by using the Speed Reduction Algorithm to which the first speed down curve is applied, and when the second speed down curve has a higher priority of influence than the first speed down curve for a second sailing section, the route determination unit 140 may derive an optimal route for the second sailing section by using the Speed Reduction Algorithm to which the second speed down curve is applied.

The storage unit 110 may update the first speed down curve and the second speed down curve for each sailing. For example, if the first speed down curve and the second reduction curve are derived by the speed down curve derivation unit 130 whenever sailing data obtained during sailing of the ship are stored, the storage unit 110 may update the first speed down curve and the second speed down curve and thus may provide an optimal route of the ship and improve the accuracy of the optimal route.

Therefore, according to the present disclosure, sailing data generated when a ship actually sails without receiving a sailing report of the ship from a shipping company are used, and, thus, the amount of the sailing data is vast and it is easy to collect and use the sailing data. Accordingly, it is possible to apply the sailing data to various ships. Also, it is free to fuse and match the sailing data with location-based global marine data, which provides high utility.

The optimal route derivation server 100 may be executed by a computer program stored in a medium including a sequence of instructions for deriving an optimal route of a ship. When executed by a computing device, the computer program causes a computing device to store marine data including winds, wave heights, and currents by matching the marine data with sailing data at each time point and each location included in the sailing data of each sailing obtained from an Automatic Identification System installed on the ship, derive a first corrected ship speed by excluding an influence of currents from a speed of the ship for each sailing, a second corrected ship speed by considering an influence of winds on the first corrected ship speed at each location, and a third corrected ship speed by considering an influence of waves on the first corrected ship speed at each location, derive a first speed down curve related to winds and a second speed down curve related to waves based on a basic speed, the second corrected ship speed and the third corrected ship speed of the ship, and derive an optimal route of the ship by using the Speed Reduction Algorithm to which the first speed down curve or the second speed down curve is applied.

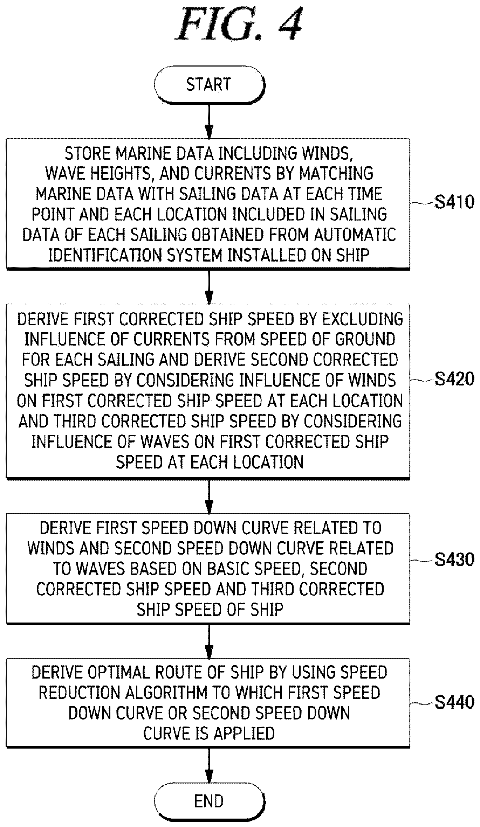

**FIG. 4** is a flowchart showing a method of deriving an optimal route of a ship performed by the optimal route derivation server according to an embodiment of the present disclosure. Referring to **FIG. 4****,** the method of deriving an optimal route of a ship performed by the optimal route derivation server 100 includes the processes time-sequentially performed according to the embodiment illustrated in **FIG. 1** to **FIG. 3****.** Therefore, descriptions of the embodiment illustrated in **FIG. 1** to **FIG. 3** may be applied to the method of deriving an optimal route of a ship performed by the optimal route derivation server 100, even though they are omitted hereinafter.

In S410, the optimal route derivation server 100 may store marine data including winds, wave heights, and currents by matching the marine data with sailing data at each time point and each location included in the sailing data of each sailing obtained from the AIS installed on a ship.

In S420, the optimal route derivation server 100 may derive a first corrected ship speed by excluding an influence of currents from the SOG for each sailing and derive a second corrected ship speed by considering an influence of winds on the first corrected ship speed at each location and a third corrected ship speed by considering an influence of waves on the first corrected ship speed at each location.

In S430, the optimal route derivation server 100 may derive a first speed down curve related to winds and a second speed down curve related to waves based on a basic speed, the second corrected ship speed and the third corrected ship speed of the ship.

In S440, the optimal route derivation server 100 may derive an optimal route of the ship by using the Speed Reduction Algorithm to which the first speed down curve or the second speed down curve is applied.

In the descriptions above, S410 to S440 may be divided into additional processes or combined into fewer processes depending on an embodiment. In addition, some of the processes may be omitted and the sequence of the processes may be changed if necessary.

The method of deriving an optimal route of a ship performed by the optimal route derivation server illustrated in **FIG.** 1 to FIG. **4** can be implemented as a computer program stored in a medium to be executed by a computer or a recording medium including instructions executable by a computer. Also, the method of deriving an optimal route of a ship performed by the optimal route derivation server illustrated in **FIG. 1 to FIG. 4** can be implemented as a computer program stored in a medium to be executed by a computer.

A computer-readable medium can be any available medium accessible by a computer, including volatile and non-volatile media, removable and non-removable media. Additionally, a computer-readable medium may include computer storage media. Computer storage media includes both volatile and non-volatile, removable and non-removable media implemented in any method or technology for storage of information such as computer-readable instructions, data structures, program modules, or other data.

The above description of the present disclosure is provided for the purpose of illustration, and it would be understood by a person with ordinary skill in the art to which the present disclosure belongs that various changes and modifications may be made without changing technical conception and essential features of the present disclosure, insofar as falling within the scope of the appended claims. Thus, it is clear that the above-described examples are illustrative in all aspects and do not limit the present disclosure. For example, each component described to be of a single type can be implemented in a distributed manner, likewise, components described to be distributed can be implemented in a combined manner.

The scope of the present disclosure is defined by the following claims rather than by the detailed description of the embodiment, and it should be understood that all modifications and embodiments conceived from the meaning and scope of the claims are included in the scope of the present disclosure.

## Claims

1. An optimal route derivation server (100) configured to drive an optimal route of a ship, comprising:
a storage unit (110) configured to store marine data including winds, wave heights, and currents by matching the marine data with sailing data at each time point and each location included in the sailing data of each sailing obtained from an Automatic Identification System installed on a ship;
a corrected ship speed derivation unit (120) configured to derive a first corrected ship speed by excluding an influence of currents from a speed of the ship for each sailing, a second corrected ship speed (200) by considering an influence of winds on the first corrected ship speed at each location, and a third corrected ship speed (300) by considering an influence of waves on the first corrected ship speed at each location;
a speed down curve derivation unit (130) configured to derive a first speed down curve (210) related to winds and a second speed down curve (310) related to waves based on a basic speed, the second corrected ship speed (200) and the third corrected ship speed (300) of the ship; and
a route determination unit (140) configured to derive an optimal route of the ship by using a Speed Reduction Algorithm to which the first speed down curve (210) or the second speed down curve (310) is applied,
**characterised in that**
the route determination unit (140) derives, at each sailing section, priorities of influences on the first speed down curve (210) and the second speed down curve (310) by comparison between the second corrected ship speed (200) and the third corrected ship speed (300) at each location, and
derives the optimal route of the ship for each sailing section by using the Speed Reduction Algorithm to which either one of the first speed down curve (210) and the second speed down curve (310) is applied based on the derived priorities of influences.

2. The optimal route derivation server (100) of Claim 1,
wherein the corrected ship speed derivation unit (120) derives the second corrected ship speed (200) based on wind's angle on a bow (202) and wind's speed (201) at each location and the third corrected ship speed (300) based on wave's angle on the bow (302) and wave's height (301) at each location.

3. The optimal route derivation server (100) of Claim 1,
wherein the speed down curve derivation unit (140) derives the first speed down curve (210) including a ratio of the first corrected ship speed to the basic speed of the ship for each wind's speed (201) at each wind's angle on the bow (202), and the second speed down curve (310) including a ratio of the first corrected ship speed to the basic speed of the ship for each wave's height (301) at each wave's angle on the bow (302).

4. The optimal route derivation server (100) of Claim 1,
wherein the storage unit (110) updates the first speed down curve (210) and the second speed down curve (310) for each sailing.

5. The optimal route derivation server (100) of Claim 1,
wherein the sailing data include at least one of a location, a course and a speed of the ship for each sailing.

6. A method of deriving an optimal route, comprising:
(S410) storing marine data including winds, wave heights, and currents by matching the marine data with sailing data at each time point and each location included in the sailing data of each sailing obtained from an Automatic Identification System installed on a ship;
(S420) deriving a first corrected ship speed by excluding an influence of currents from a speed of the ship for each sailing, a second corrected ship speed (200) by considering an influence of winds on the first corrected ship speed at each location, and a third corrected ship speed (300) by considering an influence of waves on the first corrected ship speed at each location;
(S430) deriving a first speed down curve (210) related to winds and a second speed down curve (310) related to waves based on a basic speed, the second corrected ship speed (200) and the third corrected ship speed (300) of the ship; and
(S440) deriving an optimal route of the ship by using a Speed Reduction Algorithm to which the first speed down curve (210) or the second speed down curve (310) is applied,
**characterised in that** the (S440) deriving the optimal route includes:
deriving, at each sailing section, priorities of influences on the first speed down curve and the second speed down curve by comparison between the second corrected ship speed and the third corrected ship speed; and
deriving the optimal route of the ship for each sailing section by using the Speed Reduction Algorithm to which either one of the first speed down curve and the second speed down curve is applied based on the derived priorities of influences.

7. The method of deriving an optimal route of Claim 6,
wherein the (S420) deriving the corrected ship speed includes:
deriving the second corrected ship speed (200) based on wind's angle on a bow (202) and wind's speed (201) at each location; and
deriving the third corrected ship speed (300) based on wave's angle on the bow (302) and wave's height (301) at each location.

8. The method of deriving an optimal route of Claim 6,
wherein the (S430) deriving the speed down curve includes:
deriving the first speed down curve (210) including a ratio of the first corrected ship speed to the basic speed of the ship for each wind's speed (201) at each wind's angle on the bow (202); and
deriving the second speed down curve (310) including a ratio of the first corrected ship speed to the basic speed of the ship for each wave's height (301) at each wave's angle on the bow (302).

9. The method of deriving an optimal route of Claim 6, further comprising:
updating the first speed down curve (210) and the second speed down curve (310) for each sailing.

10. The method of deriving an optimal route of Claim 6,
wherein the sailing data include at least one of a location, a course and a speed of the ship for each sailing.

11. A computer program stored in a computer-readable medium including a sequence of instructions for deriving an optimal route of a ship, which when executed by a computing device, causes a computing device to:
store marine data including winds, wave heights, and currents by matching the marine data with sailing data at each time point and each location included in the sailing data of each sailing obtained from an Automatic Identification System installed on the ship;
derive a first corrected ship speed by excluding an influence of currents from a speed of the ship for each sailing, a second corrected ship speed (200) by considering an influence of winds on the first corrected ship speed at each location, and a third corrected ship speed (300) by considering an influence of waves on the first corrected ship speed at each location;
derive a first speed down curve (210) related to winds and a second speed down curve (310) related to waves based on a basic speed, the second corrected ship speed (200) and the third corrected ship speed (300) of the ship; and
derive the optimal route of the ship by using a Speed Reduction Algorithm to which the first speed down curve (210) or the second speed down curve (310) is applied,
**characterised in that** the deriving the optimal route includes:
deriving, at each sailing section, priorities of influences on the first speed down curve and the second speed down curve by comparison between the second corrected ship speed and the third corrected ship speed; and
deriving the optimal route of the ship for each sailing section by using the Speed Reduction Algorithm to which either one of the first speed down curve and the second speed down curve is applied based on the derived priorities of influences.

## Patentansprüche

1. Optimalroutenableitungsserver (100), ausgestaltet zum Steuern einer optimalen Route eines Schiffs, umfassend:
eine Speichereinheit (110), ausgestaltet zum Speichern maritimer Daten, die Winde, Wellenhöhen und Strömungen umfassen, indem die maritimen Daten mit Fahrdaten zu jedem Zeitpunkt und an jedem Ort, die in den Fahrdaten jeder Fahrt umfasst sind, die von einem an einem Schiff installierten automatischen Identifikationssystem erhalten werden, abgeglichen werden;
eine Einheit (120) zur Ableitung einer korrigierten Schiffsgeschwindigkeit, ausgestaltet zum Ableiten einer ersten korrigierten Schiffsgeschwindigkeit durch Ausschließen eines Einflusses von Strömungen aus einer Geschwindigkeit des Schiffs für jede Fahrt, einer zweiten korrigierten Schiffsgeschwindigkeit (200) durch Berücksichtigen eines Einflusses von Winden auf die erste korrigierte Schiffsgeschwindigkeit an jedem Ort, und einer dritten korrigierten Schiffsgeschwindigkeit (300) durch Berücksichtigen eines Einflusses von Wellen auf die erste korrigierte Schiffsgeschwindigkeit an jedem Ort;
eine Einheit (130) zur Ableitung einer Geschwindigkeitsverringerungskurve, ausgestaltet zum Ableiten einer ersten Geschwindigkeitsverringerungskurve (210), die mit Winden in Beziehung steht, und einer zweiten Geschwindigkeitsverringerungskurve (310), die mit Wellen in Beziehung steht, basierend auf einer Grundgeschwindigkeit, der zweiten korrigierten Schiffsgeschwindigkeit (200) und der dritten korrigierten Schiffsgeschwindigkeit (300) des Schiffs; und
eine Routenermittlungseinheit (140), ausgestaltet zum Ableiten einer optimalen Route des Schiffs durch Verwenden eines Geschwindigkeitsverringerungsalgorithmus, auf den die erste Geschwindigkeitsverringerungskurve (210) oder die zweite Geschwindigkeitsverringerungskurve (310) angewendet wird,
**dadurch gekennzeichnet, dass**
die Routenermittlungseinheit (140) bei jedem Fahrtabschnitt Prioritäten von Einflüssen auf die erste Geschwindigkeitsverringerungskurve (210) und die zweite Geschwindigkeitsverringerungskurve (310) durch einen Vergleich zwischen der zweiten korrigierten Schiffsgeschwindigkeit (200) und der dritten korrigierten Schiffsgeschwindigkeit (300) an jedem Ort ableitet, und
die optimale Route des Schiffs für jeden Fahrtabschnitt durch Verwenden des Geschwindigkeitsverringerungsalgorithmus ableitet, auf den basierend auf den abgeleiteten Prioritäten von Einflüssen entweder die erste Geschwindigkeitsverringerungskurve (210) oder die zweite Geschwindigkeitsverringerungskurve (310) angewendet wird.

2. Optimalroutenableitungsserver (100) nach Anspruch 1,
wobei die Einheit (120) zur Ableitung einer korrigierten Schiffsgeschwindigkeit die zweite korrigierte Schiffsgeschwindigkeit (200) basierend auf einem Windwinkel (202) am Bug und einer Windgeschwindigkeit (201) an jedem Ort und die dritte korrigierte Schiffsgeschwindigkeit (300) basierend auf einem Wellenwinkel (302) am Bug und einer Wellenhöhe (301) an jedem Ort ableitet.

3. Optimalroutenableitungsserver (100) nach Anspruch 1,
wobei die Einheit (140) zur Ableitung einer Geschwindigkeitsverringerungskurve die erste Geschwindigkeitsverringerungskurve (210), die ein Verhältnis der ersten korrigierten Schiffsgeschwindigkeit zur Grundgeschwindigkeit des Schiffs für jede Windgeschwindigkeit (201) bei jedem Windwinkel (202) am Bug umfasst, und die zweite Geschwindigkeitsverringerungskurve (310), die ein Verhältnis der ersten korrigierten Schiffsgeschwindigkeit zur Grundgeschwindigkeit des Schiffs für jede Wellenhöhe (301) bei jedem Wellenwinkel (302) am Bug umfasst, ableitet.

4. Optimalroutenableitungsserver (100) nach Anspruch 1,
wobei die Speichereinheit (110) die erste Geschwindigkeitsverringerungskurve (210) und die zweite Geschwindigkeitsverringerungskurve (310) für jede Fahrt aktualisiert.

5. Optimalroutenableitungsserver (100) nach Anspruch 1,
wobei die Fahrdaten zumindest eines von einem Ort, einem Kurs und einer Geschwindigkeit des Schiffs für jede Fahrt umfassen.

6. Verfahren zum Ableiten einer optimalen Route, umfassend:
(S410) Speichern maritimer Daten, die Winde, Wellenhöhen und Strömungen umfassen, indem die maritimen Daten mit Fahrdaten zu jedem Zeitpunkt und an jedem Ort, die in den Fahrdaten jeder Fahrt umfasst sind, die von einem an einem Schiff installierten automatischen Identifikationssystem erhalten werden, abgeglichen werden;
(S420) Ableiten einer ersten korrigierten Schiffsgeschwindigkeit durch Ausschließen eines Einflusses von Strömungen aus einer Geschwindigkeit des Schiffs für jede Fahrt, einer zweiten korrigierten Schiffsgeschwindigkeit (200) durch Berücksichtigen eines Einflusses von Winden auf die erste korrigierte Schiffsgeschwindigkeit an jedem Ort, und einer dritten korrigierten Schiffsgeschwindigkeit (300) durch Berücksichtigen eines Einflusses von Wellen auf die erste korrigierte Schiffsgeschwindigkeit an jedem Ort;
(S430) Ableiten einer ersten Geschwindigkeitsverringerungskurve (210), die mit Winden in Beziehung steht, und einer zweiten Geschwindigkeitsverringerungskurve (310), die mit Wellen in Beziehung steht, basierend auf einer Grundgeschwindigkeit, der zweiten korrigierten Schiffsgeschwindigkeit (200) und der dritten korrigierten Schiffsgeschwindigkeit (300) des Schiffs; und
(S440) Ableiten einer optimalen Route des Schiffs durch Verwenden eines Geschwindigkeitsverringerungsalgorithmus, auf den die erste Geschwindigkeitsverringerungskurve (210) oder die zweite Geschwindigkeitsverringerungskurve (310) angewendet wird,
**dadurch gekennzeichnet, dass** das Ableiten (S440) der optimalen Route umfasst:
Ableiten, bei jedem Fahrtabschnitt, von Prioritäten von Einflüssen auf die erste Geschwindigkeitsverringerungskurve und die zweite Geschwindigkeitsverringerungskurve durch einen Vergleich zwischen der zweiten korrigierten Schiffsgeschwindigkeit und der dritten korrigierten Schiffsgeschwindigkeit; und
Ableiten der optimalen Route des Schiffs für jeden Fahrtabschnitt durch Verwenden des Geschwindigkeitsverringerungsalgorithmus, auf den basierend auf den abgeleiteten Prioritäten von Einflüssen entweder die erste Geschwindigkeitsverringerungskurve oder die zweite Geschwindigkeitsverringerungskurve angewendet wird.

7. Verfahren zum Ableiten einer optimalen Route nach Anspruch 6, wobei das Ableiten (S420) der korrigierten Schiffsgeschwindigkeit umfasst:
Ableiten der zweiten korrigierten Schiffsgeschwindigkeit (200) basierend auf einem Windwinkel (202) am Bug und einer Windgeschwindigkeit (201) an jedem Ort; und
Ableiten der dritten korrigierten Schiffsgeschwindigkeit (300) basierend auf einem Wellenwinkel (302) am Bug und einer Wellenhöhe (301) an jedem Ort.

8. Verfahren zum Ableiten einer optimalen Route nach Anspruch 6, wobei das Ableiten (S430) der Geschwindigkeitsverringerungskurve umfasst:
Ableiten der ersten Geschwindigkeitsverringerungskurve (210), die ein Verhältnis der ersten korrigierten Schiffsgeschwindigkeit zur Grundgeschwindigkeit des Schiffs für jede Windgeschwindigkeit (201) bei jedem Windwinkel (202) am Bug umfasst; und
Ableiten der zweiten Geschwindigkeitsverringerungskurve (310), die ein Verhältnis der ersten korrigierten Schiffsgeschwindigkeit zur Grundgeschwindigkeit des Schiffs für jede Wellenhöhe (301) bei jedem Wellenwinkel (302) am Bug umfasst.

9. Verfahren zum Ableiten einer optimalen Route nach Anspruch 6, ferner umfassend:
Aktualisieren der ersten Geschwindigkeitsverringerungskurve (210) und der zweiten Geschwindigkeitsverringerungskurve (310) für jede Fahrt.

10. Verfahren zum Ableiten einer optimalen Route nach Anspruch 6,
wobei die Fahrdaten zumindest eines von einem Ort, einem Kurs und einer Geschwindigkeit des Schiffs für jede Fahrt umfassen.

11. Computerprogramm, das in einem von einem Computer lesbaren Medium gespeichert ist und eine Folge von Anweisungen zum Ableiten einer optimalen Route eines Schiffs umfasst, die bei einer Ausführung durch eine Recheneinrichtung eine Recheneinrichtung veranlassen:
maritime Daten, die Winde, Wellenhöhen und Strömungen umfassen, durch Abgleichen der maritimen Daten mit Fahrdaten zu jedem Zeitpunkt und an jedem Ort, die in den Fahrdaten jeder Fahrt umfasst sind, die von einem auf dem Schiff installierten automatischen Identifikationssystem erhalten werden, zu speichern;
eine erste korrigierte Schiffsgeschwindigkeit durch Ausschließen eines Einflusses von Strömungen aus einer Geschwindigkeit des Schiffs für jede Fahrt, eine zweite korrigierte Schiffsgeschwindigkeit (200) durch Berücksichtigen eines Einflusses von Winden auf die erste korrigierte Schiffsgeschwindigkeit an jedem Ort, und eine dritte korrigierte Schiffsgeschwindigkeit (300) durch Berücksichtigen eines Einflusses von Wellen auf die erste korrigierte Schiffsgeschwindigkeit an jedem Ort abzuleiten;
eine erste Geschwindigkeitsverringerungskurve (210), die mit Winden in Beziehung steht, und eine zweite Geschwindigkeitsverringerungskurve (310), die mit Wellen in Beziehung steht, basierend auf einer Grundgeschwindigkeit, der zweiten korrigierten Schiffsgeschwindigkeit (200) und der dritten korrigierten Schiffsgeschwindigkeit (300) des Schiffs abzuleiten; und
die optimale Route des Schiffs durch Verwenden eines Geschwindigkeitsverringerungsalgorithmus abzuleiten, auf den die erste Geschwindigkeitsverringerungskurve (210) oder die zweite Geschwindigkeitsverringerungskurve (310) angewendet wird,
**dadurch gekennzeichnet, dass** das Ableiten der optimalen Route umfasst:
Ableiten, bei jedem Fahrtabschnitt, von Prioritäten von Einflüssen auf die erste Geschwindigkeitsverringerungskurve und die zweite Geschwindigkeitsverringerungskurve durch einen Vergleich zwischen der zweiten korrigierten Schiffsgeschwindigkeit und der dritten korrigierten Schiffsgeschwindigkeit; und
Ableiten der optimalen Route des Schiffs für jeden Fahrtabschnitt durch Verwenden des Geschwindigkeitsverringerungsalgorithmus, auf den basierend auf den abgeleiteten Prioritäten von Einflüssen entweder die erste Geschwindigkeitsverringerungskurve oder die zweite Geschwindigkeitsverringerungskurve angewendet wird.

## Revendications

1. Serveur de dérivation d'itinéraire optimal (100), configuré pour piloter un itinéraire optimal d'un navire, comprenant :
une unité de stockage (110) configurée pour stocker des données maritimes incluant des vents, des hauteurs de vagues et des courants en mettant en correspondance les données maritimes avec des données de navigation à chaque instant et chaque emplacement inclus dans les données de navigation de chaque navigation obtenue à partir d'un système d'identification automatique installé sur un navire ;
une unité de dérivation de vitesse corrigée du navire (120) configurée pour dériver une première vitesse corrigée du navire en excluant une influence des courants d'une vitesse du navire pour chaque navigation, une deuxième vitesse corrigée du navire (200) en prenant en considération une influence des vents sur la première vitesse corrigée du navire à chaque emplacement, et une troisième vitesse corrigée du navire (300) en prenant en considération une influence des vagues sur la première vitesse corrigée du navire à chaque emplacement ;
une unité de dérivation de courbe de réduction de vitesse (130) configurée pour dériver une première courbe de réduction de vitesse (210) relative aux vents et une deuxième courbe de réduction de vitesse (310) relative aux vagues sur la base d'une vitesse de base, de la deuxième vitesse corrigée du navire (200) et de la troisième vitesse corrigée du navire (300) ; et
une unité de détermination d'itinéraire (140) configurée pour dériver un itinéraire optimal du navire en utilisant un algorithme de réduction de vitesse auquel la première courbe de réduction de vitesse (210) ou la deuxième courbe de réduction de vitesse (310) est appliquée,
**caractérisé en ce que** l'unité de détermination d'itinéraire (140) dérive, dans chaque section de navigation, des priorités des influences sur la première courbe de réduction de vitesse (210) et la deuxième courbe de réduction de vitesse (310) par comparaison entre la deuxième vitesse corrigée du navire (200) et la troisième vitesse corrigée du navire (300) à chaque emplacement, et
dérive l'itinéraire optimal du navire pour chaque section de navigation en utilisant l'algorithme de réduction de vitesse auquel l'une ou l'autre de la première courbe de réduction de vitesse (210) et de la deuxième courbe de réduction de vitesse (310) est appliquée sur la base des priorités dérivées des influences.

2. Serveur de dérivation d'itinéraire optimal (100) selon la revendication 1,
dans lequel l'unité de dérivation de vitesse corrigée du navire (120) dérive la deuxième vitesse corrigée du navire (200) sur la base de l'angle du vent sur une proue (202) et de la vitesse du vent (201) à chaque emplacement et la troisième vitesse corrigée du navire (300) sur la base de l'angle de la vague sur la proue (302) et de la hauteur de vague (301) à chaque emplacement.

3. Serveur de dérivation d'itinéraire optimal (100) selon la revendication 1,
dans lequel l'unité de dérivation de courbe de réduction de vitesse (140) dérive la première courbe de réduction de vitesse (210) incluant un rapport de la première vitesse corrigée du navire sur la vitesse de base du navire pour chaque vitesse du vent (201) à chaque angle du vent sur la proue (202), et la deuxième courbe de réduction de vitesse (310) incluant un rapport de la première vitesse corrigée du navire sur la vitesse de base du navire pour chaque hauteur de vague (301) à chaque angle de la vague sur la proue (302).

4. Serveur de dérivation d'itinéraire optimal (100) selon la revendication 1,
dans lequel l'unité de stockage (110) met à jour la première courbe de réduction de vitesse (210) et la deuxième courbe de réduction de vitesse (310) pour chaque navigation.

5. Serveur de dérivation d'itinéraire optimal (100) selon la revendication 1,
dans lequel les données de navigation comprennent au moins un paramètre parmi un emplacement, un cap et une vitesse du navire pour chaque navigation.

6. Procédé de dérivation d'un itinéraire optimal, comprenant les étapes consistant à :
(S410) stocker des données maritimes incluant des vents, des hauteurs de vagues et des courants en mettant en correspondance les données maritimes avec des données de navigation à chaque instant et chaque emplacement inclus dans les données de navigation de chaque navigation obtenue à partir d'un système d'identification automatique installé sur un navire ;
(S420) dériver une première vitesse corrigée du navire en excluant une influence des courants d'une vitesse du navire pour chaque navigation, une deuxième vitesse corrigée du navire (200) en prenant en considération une influence des vents sur la première vitesse corrigée du navire à chaque emplacement, et une troisième vitesse corrigée du navire (300) en prenant en considération une influence des vagues sur la première vitesse corrigée du navire à chaque emplacement ;
(S430) dériver une première courbe de réduction de vitesse (210) relative aux vents et une deuxième courbe de réduction de vitesse (310) relative aux vagues sur la base d'une vitesse de base, de la deuxième vitesse corrigée du navire (200) et de la troisième vitesse corrigée du navire (300) ; et
(S440) dériver un itinéraire optimal du navire en utilisant un algorithme de réduction de vitesse auquel la première courbe de réduction de vitesse (210) ou la deuxième courbe de réduction de vitesse (310) est appliquée,
**caractérisé en ce que** l'étape consistant à dériver (S440) l'itinéraire optimal comprend de :
dériver, dans chaque section de navigation, des priorités des influences sur la première courbe de réduction de vitesse et la deuxième courbe de réduction de vitesse par comparaison entre la deuxième vitesse corrigée du navire et la troisième vitesse corrigée du navire ; et
dériver l'itinéraire optimal du navire pour chaque section de navigation en utilisant l'algorithme de réduction de vitesse auquel l'une ou l'autre de la première courbe de réduction de vitesse et de la deuxième courbe de réduction de vitesse est appliquée sur la base des priorités dérivées des influences.

7. Procédé de dérivation d'un itinéraire optimal selon la revendication 6,
dans lequel l'étape consistant à dériver (S420) la vitesse corrigée du navire comprend de :
dériver la deuxième vitesse corrigée du navire (200) sur la base de l'angle du vent sur une proue (202) et de la vitesse du vent (201) à chaque emplacement ; et
dériver la troisième vitesse corrigée du navire (300) sur la base de l'angle de la vague sur la proue (302) et de la hauteur de vague (301) à chaque emplacement.

8. Procédé de dérivation d'un itinéraire optimal selon la revendication 6,
dans lequel l'étape consistant à dériver (S430) la courbe de réduction de vitesse comprend de :
dériver la première courbe de réduction de vitesse (210) incluant un rapport de la première vitesse corrigée du navire sur la vitesse de base du navire pour chaque vitesse du vent (201) à chaque angle du vent sur la proue (202) ; et
dériver la deuxième courbe de réduction de vitesse (310) incluant un rapport de la première vitesse corrigée du navire sur la vitesse de base du navire pour chaque hauteur de vague (301) à chaque angle de la vague sur la proue (302).

9. Procédé de dérivation d'un itinéraire optimal selon la revendication 6, comprenant en outre l'étape consistant à :
mettre à jour la première courbe de réduction de vitesse (210) et la deuxième courbe de réduction de vitesse (310) pour chaque navigation.

10. Procédé de dérivation d'un itinéraire optimal selon la revendication 6,
dans lequel les données de navigation comprennent au moins un paramètre parmi un emplacement, un cap et une vitesse du navire pour chaque navigation.

11. Programme d'ordinateur stocké dans un support lisible par ordinateur, incluant une séquence d'instructions pour dériver un itinéraire optimal d'un navire, qui, lorsqu'elles sont exécutées par un dispositif d'ordinateur, amènent un dispositif d'ordinateur à :
stocker des données maritimes incluant des vents, des hauteurs de vagues et des courants en mettant en correspondance les données maritimes avec des données de navigation à chaque instant et chaque emplacement inclus dans les données de navigation de chaque navigation obtenue à partir d'un système d'identification automatique installé sur le navire ;
dériver une première vitesse corrigée du navire en excluant une influence des courants d'une vitesse du navire pour chaque navigation, une deuxième vitesse corrigée du navire (200) en prenant en considération une influence des vents sur la première vitesse corrigée du navire à chaque emplacement, et une troisième vitesse corrigée du navire (300) en prenant en considération une influence des vagues sur la première vitesse corrigée du navire à chaque emplacement ;
dériver une première courbe de réduction de vitesse (210) relative aux vents et une deuxième courbe de réduction de vitesse (310) relative aux vagues sur la base d'une vitesse de base, de la deuxième vitesse corrigée du navire (200) et de la troisième vitesse corrigée du navire (300) ; et
dériver l'itinéraire optimal du navire en utilisant un algorithme de réduction de vitesse auquel la première courbe de réduction de vitesse (210) ou la deuxième courbe de réduction de vitesse (310) est appliquée,
**caractérisé en ce que** l'étape consistant à dériver l'itinéraire optimal comprend de :
dériver, dans chaque section de navigation, des priorités des influences sur la première courbe de réduction de vitesse et la deuxième courbe de réduction de vitesse par comparaison entre la deuxième vitesse corrigée du navire et la troisième vitesse corrigée du navire ; et
dériver l'itinéraire optimal du navire pour chaque section de navigation en utilisant l'algorithme de réduction de vitesse auquel l'une ou l'autre de la première courbe de réduction de vitesse et de la deuxième courbe de réduction de vitesse est appliquée sur la base des priorités dérivées des influences.
